(19) Europäisches Patentamt
European Patent Office
Office européen des brevets

(11) **EP 2 263 871 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(51) Int Cl.:
***B32B 27/36*** *(2006.01)*

(21) Anmeldenummer: **10005985.6**

(22) Anmeldetag: **10.06.2010**

(54) **Mehrschichtige, biaxial orientierte Polyesterfolie**

Multiple layer, biaxially oriented polyester film

Film polyester multicouche orienté de manière biaxiale

(84) Benannte Vertragsstaaten:
**AT CH DE FR GB LI LU PL**

(30) Priorität: **17.06.2009 DE 102009025134**

(43) Veröffentlichungstag der Anmeldung:
**22.12.2010 Patentblatt 2010/51**

(73) Patentinhaber: **Mitsubishi Polyester Film GmbH 65203 Wiesbaden (DE)**

(72) Erfinder:
• **Jesberger, Martin, Dr.**
  **55126 Mainz (DE)**
• **Bothe, Lothar, Dr.**
  **55124 Mainz (DE)**
• **Konrad, Matthias, Dr.**
  **65830 Kriftel (DE)**
• **Witte, Ina, Dr.-Ing.**
  **55435 Gau-Algesheim (DE)**
• **Hora, Franz**
  **65830 Kriftel (DE)**
• **Brömmel, Paul**
  **55129 Mainz (DE)**

(74) Vertreter: **Schweitzer, Klaus et al
Plate Schweitzer Zounek
Industriepark Kalle-Albert
Rheingaustrasse 196
65203 Wiesbaden (DE)**

(56) Entgegenhaltungen:
**EP-A2- 1 857 496**

**Beschreibung**

Die Erfindung betrifft eine weiße, mehrschichtige, biaxial orientierte Polyesterfolie, welche sich für Dreheinschlags- und Faltverpackungen eignet. Die Folie umfasst eine Basisschicht (B) enthaltend überwiegend einen thermoplastischen Polyester mit einem Ethylenisophthalatgehalt von 8,5 bis 20 Gew.-% und Weißpigment sowie mindestens eine Deckschicht (A) überwiegend aus thermoplastischem Polyester enthaltend Weißpigment und Antiblockmittel in einer vorgegebenen Größe und Konzentration.

Transparente und weiße biaxial orientierte Polyesterfolien, insbesondere für die Verpackungsanwendung, sind nach dem Stand der Technik bekannt.

Das Verpacken von Gegenständen, insbesondere kleinen Teilen wie Bonbons, Schokoladeneier, Kerzen usw. durch Dreheinschlag oder Einfalten ist seit vielen Jahren bekannt. Übliche Kunststofffolien weisen für diese Anwendung allerdings zu schlechte Falt- und/oder Verdrillungseigenschaften (Dreheinschlagseigenschaften) auf.

In DE-A-10 2005 058 914 wird eine weiße biaxial orientierte Polyesterfolie beschrieben, die ein Weißpigment in der Konzentration von 3 bis 15 Gew.-% in der Basisschicht (B) und 2 bis 15 Gew.-% in der Deckschicht (A) enthält, wobei die Konzentration des weißfärbenden Pigments in der Deckschicht (A) größer ist als in der Basisschicht (B). Neben dem Weißpigment werden in den Deckschichten Antiblockmittel für bessere Wicklung, Rollenaufmachung sowie Verarbeitungsverhalten verwendet. Die Folie findet Anwendung als Deckelfolie für Lebensmittelbehältnisse. Die Folie besitzt allerdings ungenügende Falt- und Dreheinschlagseigenschaften.

In EP-A-1 857 496 wird eine Polyesterfolie beschrieben, die 1 bis 8 Gew.-% Isophthalat-abgeleitete Einheiten enthält. Die Folie wird für die Laminierung von Blechen verwendet. Die Verwendung von 1 bis 8 Gew.-% Isophthalat-abgeleiteten Einheiten im Polyester reicht nicht aus, um eine biaxial orientierte Polyesterfolie mit guten Falt- und Verdrillungseigenschaften bereitzustellen.

Polyolefinfolien mit guten Falt- und Verdrillungseigenschaften sind nach dem Stand der Technik bekannt. In WO-A-01/0285 werden modifizierte Polypropylenfolien beschrieben, die gute Falt- und Dreheinschlagseigenschaften aufweisen. Die optischen, mechanischen und Schrumpf-Eigenschaften im Vergleich zu biaxial orientierten Polyesterfolien sind unbefriedigend.

Es ist hinreichend bekannt, dass Polyesterfolien schlechte Dreheinschlags- und Falteigenschaften haben. Aluminiumfolien besitzen eine geringe Lichtdurchlässigkeit, weisen sehr gute Falteigenschaften auf, reißen aber beim Verdrillen bzw. Dreheinschlag leichter ein und besitzen eine schlechte Durchstoßfestigkeit. Weiterhin wird bei Aluminiumfolien die Bedruckbarkeit als problematisch angesehen.

Aufgabe der vorliegenden Erfindung ist es, eine biaxial orientierte Polyesterfolie zur Verfügung zu stellen, die sich insbesondere für die Anwendung als gefaltete oder verdrillte Verpackungen eignet; insbesondere soll sie sich auszeichnen durch:

- gute Falt- und Verdrillungseigenschaften,
- gute optischen Eigenschaften (niedrige Licht- und/oder UV-Strahlungstransmission, brillante weiße Polyesterfolie),
- gute Laufsicherheit in der Herstellung und
- gute Verarbeitungseigenschaften.

Unter guten optischen Eigenschaften wird erfindungsgemäß

- ein Weißgrad (Bestimmung des Weißgrads s. u.) von >60, bevorzugt von >70 und ganz besonders bevorzugt von >75,
- eine Transparenz (nach ASTM-D 1033-77) von <65 %, bevorzugt von <60 % und ganz besonders bevorzugt von <55 %
- sowie ein Glanz von >80, bevorzugt >90 und besonders bevorzugt von >100 (gemessen nach DIN 67 530 bei 60°),

verstanden.

Unter Falteigenschaften bzw. Faltbarkeit soll die Eigenschaft einer Folie verstanden werden, nach der Faltung der Folie bei Raumtemperatur ihre gefaltete Gestalt beizubehalten (= bleibende Faltung), d. h. die Folie geht nach der Faltung nicht auf Grund des "Formerinnerungsvermögens" üblicher Kunststofffolien in den ursprünglichen Zustand zurück. Ein einfacher Test, die Falteigenschaften zu beurteilen, kann durch Pressen einer 180°-Faltung der Folie bei Raumtemperatur und anschließender Messung des Winkels, auf den sich die Faltung anschließend öffnet, erfolgen. Niedrige bzw. kleine Winkel sind erwünscht, da sie eine größere Retention der Falte anzeigen.

Bei der Verdrillungsverpackung mittels Dreheinschlag wird das Verpackungsgut zunächst in der Folie eingeschlagen und anschließend ein- oder beidseitig durch seitliches Verdrillen oder Eindrehen der Folie verschlossen ("Bonbon-Dreheinschlag"). Bei dieser Verpackungsart ist es notwendig, dass die Folie einerseits verdrillbar ist; sie darf beim Verdrillen nicht einreißen. Andererseits muss die Folie ihre verdrillte bzw. eingedrehte Form beibehalten. Unter guten Verdrillungseigenschaften ist das problemlose Einschlagen von Verpackungsgütern mittels Verdrillung bzw. Dreheinschlag und die Stabilität der Verdrillung anzusehen. Eine hohe Verdrillungsstabilität ist insbesondere notwendig, um zu verhindern, dass das Verpackungsgut bei Transport und Lagerung durch selbständiges Aufdrehen der Folie aus der Verpackung herausgelöst wird.

Die Falteigenschaft und die Verdrillungseigenschaft einer Folie können mit einem Falttest und einem Dreheinschlagstest bestimmt werden. Eine Folie mit guten Falt und Verdrillungseigenschaften im Sinne der gestellten Aufgabe erfüllt die folgenden Kriterien:

1. Verbleibender Faltwinkel $\alpha \leq 30°$ nach dem Falten unter den angegebenen Bedingungen;
2. Verdrillungseigenschaft/Dreheinschlagseigenschaft und Verdrillungsstabilität unter den gegebenen Bedingungen: sehr gut.

Erfüllt eine Folie diese Bedingungen, so eignet sie sich für Verpackungen, bei denen das Packgut eingefaltet wird oder mittels Dreheinschlag umhüllt wird.

Die gestellte Aufgabe wird erfindungsgemäß durch die Bereitstellung einer weißen, coextrudierten, biaxial orientierten Polyesterfolie mit einer Basisschicht (B) und mindestens einer Deckschicht gelöst, wobei

a) die Basisschicht (B) aus überwiegend thermoplastischem Polyester besteht, der 8,5 bis 20 Gew.-% Ethylenisophthalat-abgeleitete Einheiten und ein weißfärbendes Pigment in einer Konzentration von 2 bis 15 Gew.-% (Gew.-%-Angaben bezogen auf die Basisschicht) enthält, und

b) mindestens eine der äußeren Deckschicht aus überwiegend thermoplastischem Polyester besteht, der ein weißfärbendes Pigment in einer Konzentration von 2 bis 15 Gew.-% und zusätzlich 0,05 bis 2,0 Gew.-% eines Antiblockmittels mit einem mittleren Durchmesser ($d_{50}$-Wert) im Bereich von 2,0 bis 8,0 $\mu$m (Gew.-% Angaben bezogen auf die Deckschicht) enthält.

Sofern nichts anderes gesagt ist, beziehen sich Gewichtsprozentangaben immer auf die jeweilige Schicht der Folie.

"Überwiegend" im erfindungsgemäßen Sinn bedeutet, dass die Basisschicht zu mindestens 80, bevorzugt mindestens 90 und besonders bevorzugt zu mindestens 95 Gew.-% aus Polyester besteht.

In einer bevorzugten Ausführungsform ist die Folie dreischichtig aufgebaut; sie besteht dann aus der Basisschicht (B), der Deckschicht (A) und einer der Deckschicht (A) gegenüberliegenden Deckschicht (C). Besonders bevorzugt ist der symmetrische dreischichtige Aufbau, bei der die Deckschichten (A) und (C) identisch sind (ABA-Folie). Dieser Folienaufbau bringt hinsichtlich einer einwandfreien Verarbeitung der Folie die besten Voraussetzungen mit sich. So besitzen beispielsweise unsymmetrische Folienaufbauten (unterschiedliche Zusammensetzungen und/oder Dicken) wie beispielsweise (ABC) eine bestimmte Rollneigung (engl. *Curling*), was unerwünscht ist.

### Basisschicht (B)

Die Basisschicht (B) der Folie besteht aus Polyester und Additiven. Der Polyester besteht zu mindestens 70 Gew.-%, bevorzugt zu mindestens 75 Gew.-% und besonders bevorzugt zu mindestens 80 Gew.-%, aus Ethylenterephthalat-abgeleiteten Einheiten und zu 8,5 bis 20 Gew.-%, bevorzugt 9,0 bis 18 Gew.-% und besonders bevorzugt 9,5 bis 16 Gew.-%, Ethylenisophthalat-abgeleiteten Einheiten (jeweils bezogen auf die Gesamtmasse an Polyester). Verwendet man Polyester mit einem geringeren Gehalt an Ethylenisophthalat-abgeleiteten Einheiten als 8,5 Gew.-%, so sind die Falt- und Verdrillungseigenschaften der Folie ungenügend. Verwendet man Polyester mit einem höheren Gehalt an Ethylenisophthalat-abgeleiteten Einheiten als 20 Gew.-%, verschlechtern sich die mechanischen Eigenschaften der Folie, welches sich z. B. in einer verschlechterten Verarbeitbarkeit der Folie bemerkbar macht (sie reißt leichter bei der Verarbeitung). Der Gehalt an Ethylenterephthalat-abgeleiteten Einheiten im Polyester kann bis zu 91,5 Gew.-% betragen, liegt aber gewöhnlich maximal bei 89 bis 91 Gew.-%.

Die restlichen Monomereinheiten eventuell verbleibender Polyesteranteile stammen aus anderen aliphatischen, cycloaliphatischen oder aromatischen Diolen bzw. anderen Dicarbonsäuren.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 4 bis 6 darstellt (insbesondere Propan-1,3-diol, Butan-1,4-diol, Pentan-1,5-diol und Hexan-1,6-diol), oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen.

Andere aromatische Dicarbonsäuren sind bevorzugt Benzoldicarbonsäuren, Naphtalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$)-Alkandisäuren besonders

geeignet, wobei der Alkananteil geradkettig oder verzweigt sein kann.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

### Deckschicht (A)

Für die beiden Deckschichten (A) und (C) können Polyester verwendet werden, die zu mindestens 90 Gew.-%, insbesondere zu mindestens 95 Gew.-%, ganz besonders bevorzugt zu mindestens 97 Gew.-%, aus Ethylenterephthalat-abgeleiteten Einheiten, d. h. aus Polyethylenterephthalat, bestehen. Die restlichen Monomereinheiten eventuell verbleibender Polyesteranteile stammen wiederum aus anderen aliphatischen, cycloaliphatischen oder aromatischen Diolen bzw. anderen Dicarbonsäuren wie sie oben für die Basisschicht (B) bereits beschrieben wurden.

### Weißpigment

Zur Erzielung der gewünschten optischen Eigenschaften, insbesondere des gewünschten Weißgrades, der Transparenz und des Glanzes der Folie, werden in die Basisschicht (B) und in die Deckschicht (A) Weißpigmente eingearbeitet. Erfindungsgemäß einsetzbare Weißpigmente sind Bariumsulfat, Calciumcarbonat und Titandioxid, bevorzugt Bariumsulfat und Titandioxid, besonders bevorzugt Titandioxid. Titandioxid wird bevorzugt als alleiniges einfärbendes Weißpigment verwendet. Es wird bevorzugt als Extrusionsmasterbatch dem Polyesterrohstoff zugegeben. Typische Bereiche für die $TiO_2$-Konzentration im Extrusionsmasterbatch sind 25 bis 70 Gew.-%. Das Titandioxid kann sowohl vom Rutil-Typ als auch vom Anatas-Typ sein. Vorzugsweise wird Titandioxid vom Rutil-Typ mit anorganischer Beschichtung verwendet, die zur Reduzierung der Photoaktivität des $TiO_2$ beiträgt. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente in den vorgesehenen Konzentrationen ein brillantes weißes Aussehen und die gewünschte niedrige Transparenz sowohl gegenüber sichtbarem Licht als auch UV-Strahlung.

Es wurde gefunden, dass bei der bevorzugten Verwendung von im wesentlichen Rutil-$TiO_2$ als einfärbendem Weißpigment die Folie weniger anfällig gegenüber Einreißen und Delaminierung wird. Eine Zugabe des Rutil-$TiO_2$ bevorzugt über die Masterbatchtechnologie hat den Vorteil, dass Farbunterschiede, z. B. durch nicht konstante Regenerateigenschaften, relativ leicht korrigiert werden können.

Um zu dem gewünschten Weißgrad (>60) und zu der gewünschten niedrigen Transparenz (<65 %) zu gelangen, sollte die Basisschicht (B) und Deckschicht (A) hochgefüllt sein. Die Partikelkonzentration zur Erzielung der gewünschten niedrigen Transparenz bei der weißen Folie liegt bei größer/gleich 2 Gew.-%, jedoch kleiner/gleich 15 Gew.-%, vorzugsweise ≥3,5 Gew.-%, jedoch ≤14 Gew.-% und ganz besonders bevorzugt ≥4 Gew.-%, jedoch ≤13 Gew.-%, bezogen auf das Gesamtgewicht der sie enthaltenden Schicht.

Zu einer weiteren Steigerung des Weißgrades der weißen Folie können geeignete optische Aufheller der Basisschicht und/oder den anderen Schichten zugesetzt werden. Geeignete optische Aufheller sind beispielsweise Hostalux® KS der Firma Clariant (Frankfurt am Main, DE) oder Eastobrite® OB-1 der Firma Eastman (Kingsport, USA).

Erfindungsgemäß enthält die Deckschicht (A), gegebenenfalls auch die weitere Deckschicht (C) zumindest ein weißfärbendes Pigment in einer Konzentration von 2 bis 15 Gew.-%.

Enthält die Deckschicht (A) ein weißfärbendes Pigment in einer Konzentration von kleiner 2 Gew.-%, so geht der brillante weiße Charakter der Folie verloren, so dass ein nachfolgend aufgebrachter Druck auf dieser Seite dem Betrachter fehlerhaft erscheint. Enthält die Deckschicht (A) dagegen ein weißfärbendes Pigment in einer Konzentration von größer 15 Gew.-%, so ist die Gefahr groß, dass das Weißpigment auskreidet.

Es wurde gefunden, dass die Wickelbarkeit der Folie und die Rollenaufmachung deutlich verbessert werden können, wenn die Deckschicht (A) und gegebenenfalls auch die weitere Deckschicht (C) ein nicht weißfärbendes Antiblockmittel enthält.

Dabei wurde festgestellt, dass insbesondere der Partikeldurchmesser $d_{50}$ und die Konzentration des verwendeten Antiblockmittels in der Deckschicht (A) für eine gute Wickelbarkeit und für eine gute Verarbeitbarkeit der Folie von Bedeutung sind.

Zur Verbesserung der Wickelung und Verarbeitbarkeit der Folie enthält die Deckschicht (A) bevorzugt ein Antiblockmittel mit einem mittleren Durchmesser ($d_{50}$-Wert) im Bereich von 2 bis 8 $\mu$m.

In der besonders bevorzugten Ausführungsform enthält die Deckschicht (A) ein Antiblockmittel mit einem mittleren Durchmesser im Bereich von 2,1 bis 7 $\mu$m und in der ganz besonders bevorzugten Ausführungsform im Bereich von 2,2 bis 6 $\mu$m.

Enthält die Deckschicht (A) dagegen ein Antiblockmittel, bei dem der mittlere Durchmesser außerhalb des bevorzugten Bereiches liegt, so wirkt sich dies negativ auf die Wickelung, die Verarbeitbarkeit und auf die optischen Eigenschaften der Folie aus.

Enthält die Deckschicht (A) ein Antiblockmittel, bei dem der mittlere Durchmesser größer als 8 $\mu$m ist, so werden die optischen Eigenschaften (Glanz) und die Wickelung der Folie schlechter. Die Folie neigt in diesem Fall zum Teleskopieren. Enthält die Deckschicht (A) der Folie dagegen ein Antiblockmittel, bei dem der mittlere Durchmesser kleiner als 2 $\mu$m ist, so werden die Wickelung der Folie und damit die Rollenaufmachung schlechter, und die Folie neigt zum Verblocken.

Die Konzentration der inerten, nicht weißfärbenden Partikel (Antiblockmittel) in der Deckschicht (A) und gegebenenfalls auch der weiteren Deckschicht (C) liegt zweckmäßigerweise zwischen 0,05 und 2,0 Gew.-%, in der bevorzugten Ausführungsform zwischen 0,1 und 1,5 Gew.-% und in der besonders bevorzugten Ausführungsform zwischen 0,2 und 1,0 Gew.-% und richtet sich im wesentlichen nach den zu erzielenden optischen Eigenschaften und der zu erzielenden Wickelbarkeit der Folie.

Typische nicht weißfärbende Partikel (Antiblockmittel) sind anorganische und/oder organische Partikel, beispielsweise amorphe Kieselsäure, Talk, Aluminiumoxid, Kaolin oder vernetzte organische Partikel, z. B. auf Basis von Polystyrol oder Arcrylat.

Die Antiblockmittel können z. B. als glykolische Dispersion während der Polykondensation bei der Polyesterrohstoffherstellung oder über Masterbatche den einzelnen Schichten der Folie bei der Extrusion in den jeweils vorteilhaften Konzentrationen zugegeben werden.

Die Zugabe von Antiblockmittel in die Deckschicht (A) in der erfindungsgemäßen Konzentration hat außerdem einen positiven Effekt auf die Rauigkeit und den Reibungskoeffizienten der Deckschicht (A). Um das Verarbeitungsverhalten der Folie noch weiter zu verbessern, sollte die Konzentration des Antiblockmittels so gewählt werden, dass für die Rauigkeit und für den Reibungskoeffizient folgende Werte erzielt werden:

- Der Reibungskoeffizient (COF) der Seite (A) gegen sich selbst soll kleiner/gleich 0,40 sein. Andernfalls sind das Wickelverhalten und die Weiterverarbeitung der Folie unbefriedigend.
- Die Rauigkeit der Deckschicht (A), ausgedrückt als $R_a$-Wert, soll größer/gleich 40 nm und kleiner/gleich 150 nm sein. Kleinere $R_a$-Werte als 40 nm haben negative Auswirkungen auf das Wickel- und Verarbeitungsverhalten der Folie, größere $R_a$-Werte als 150 nm beeinträchtigen die optischen Eigenschaften (Glanz) der Folie.

Die Dicke der Deckschicht (A) ist im Allgemeinen größer als 0,4 $\mu$m und liegt bevorzugt im Bereich von 0,5 bis 5 $\mu$m und besonders bevorzugt im Bereich von 0,6 bis 4 $\mu$m. Ist die Dicke der Deckschicht (A) kleiner als 0,4 $\mu$m, so wirkt sich dies negativ auf die Laufsicherheit aus. Die Folie reißt leichter bei der Absäumung der Randstreifen.

Die Gesamtdicke der erfindungsgemäßen Polyesterfolie kann innerhalb weiter Grenzen variieren. Sie beträgt bevorzugt 8 bis 30 $\mu$m, besonders bevorzugt 9 bis 25 $\mu$m und ganz besonders bevorzugt 10 bis 20 $\mu$m, wobei die Basisschicht einen Anteil von 50 bis 95 % an der Gesamtdicke hat. Folien mit Dicken unter 8 $\mu$m sind nur noch schlecht herstellbar.

Die Basisschicht (B) sowie auch die Deckschichten (A) und (C) können zusätzlich übliche Additive wie z. B. Stabilisatoren enthalten. Sie werden üblicherweise dem Polymer oder der Polymermischung vor dem Aufschmelzen zugesetzt.

**Herstellungsverfahren**

Gegenstand der vorliegenden Erfindung ist auch ein Verfahren zur Herstellung der erfindungsgemäßen Folien. Es umfasst

- das Herstellen einer mehrschichtigen Folie aus einer Basisschicht (B) und Deckschicht(en) (A) (und C) durch Coextrusion und Ausformen der Schmelzen zu einem flachen Schmelzefilm und
- biaxiales Strecken der Folie und Thermofixieren der gestreckten Folie.

Zunächst werden die Rohstoffe der einzelnen Schichten in Extrudern komprimiert und verflüssigt. Die Schmelzen werden gleichzeitig durch eine Breitschlitzdüse gepresst, und die ausgepresste mehrschichtige Folie wird auf einer oder mehreren gekühlten Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die biaxiale Verstreckung der Folie im Allgemeinen durchgeführt werden kann, kann in einem relativ großen Bereich variiert werden. Die Längsstreckung wird im Allgemeinen bei ca. 80 bis 140 °C und die Querstreckung bei ca. 80 bis 150°C durchgeführt. Das Längsstreckverhältnis $\lambda_{MD}$ liegt dabei im Bereich von 2,0:1 bis 5:1. Das Querstreckverhältnis $\lambda_{TD}$ liegt im Allgemeinen im Bereich von 2,5:1 bis 5,0:1. Vor der Querstreckung kann man eine oder beide Oberflächen der Folie nach bekannten Verfahren in-line beschichten. Die In-line-Beschichtung kann beispielsweise zu einer verbesserten Haftung einer Metallschicht oder einer eventuell später aufzubringenden Druckfarbe, aber auch zur Verbesserung des antistatischen Verhaltens dienen, um nur einige Beispiele zu nennen.

Bei der der Streckung nachfolgenden Thermofixierung zur Schrumpferniedrigung wird die Folie etwa 0,1 bis 10 s lang bei einer Temperatur von ca. 150 bis 250°C gehalten und dann gesäumt und danach aufgewickelt.

Vor der Absäumung der Saum- bzw. Randstreifen wirkt sich besonders positiv eine gezielte Erwärmung der Ränder auf die Laufsicherheit aus. Diese Erwärmung erfolgt mit Heißluft. Definitionsgemäß spricht man von guter Laufsicherheit, wenn nach einer 10 Stunden-Produktion maximal ein Abriss auftritt. Ein Abriss ist eine Betriebsstörung, die durch das ungewollte Abreißen, Splitten oder Einreißen der Folie auftritt.

Die Thermofixierung der Folie ist wichtig, da hierdurch die Kristallinität der Folie erhöht wird und der Schrumpf abgebaut wird. Ohne Thermofixierung ist der Schrumpf der Folie so hoch, dass die Folie ungenügende Bedruckungseigenschaften zeigt (unerwünschter Schrumpf bei der Druckfarbentrocknung).

Bevorzugt werden nach der biaxialen Streckung eine oder beide Oberflächen der Folie nach einer der bekannten Methoden zusätzlich corona- oder flammbehandelt. Die Behandlungsintensität liegt im Allgemeinen über 50 mN/m.

Die erfindungsgemäße Folie zeigt ein sehr gutes Handling, sehr gute Wickeleigenschaften und ein sehr gutes Verarbeitungsverhalten. Sie zeichnet sich durch gute Falt- und Verdrillungseigenschaften und optische Eigenschaften aus. Die erfindungsgemäße Folie eignet sich als Verpackungsmaterial für Nahrungs- und Genussmittel, insbesondere als kalt-faltbare Folie für Faltumverpackungen und Dreheinschlagsverpackungen. Die Folie eignet sich insbesondere hervorragend zur Verpackung von feuchtigkeits- und/oder luftempfindlichen und insbesondere licht- oder UV-strahlungsempfindlichen Nahrungs- und Genussmitteln. Die geringe Licht- und UV-Strahlungsdurchlässigkeit der Folie wirkt sich insbesondere auf die Haltbarkeit von fetthaltigen Lebensmitteln aus (Verhinderung von Verfärbungen, Geschmacksveränderung wie Ranzigwerden).

Die Folie nach der vorliegenden Erfindung weist hervorragende optische Eigenschaften auf, zeigt hervorragende Weiterverarbeitungseigenschaften und eine ausgezeichnete Rollenaufmachung. Die Folie eignet sich auf Grund ihres sehr guten Handlings und ihrer sehr guten Verarbeitungseigenschaften insbesondere für die Verarbeitung auf schnelllaufenden Maschinen.

Bei der Herstellung der Folie ist gewährleistet, dass das Regenerat, das z. B. als Verschnitt bei der Folienherstellung anfällt, in einer Konzentration von ca. 20 bis 60 Gew.-%, bezogen auf das Gesamtgewicht der Folie, bevorzugt wieder dem Extruder für die Basisschicht zugeführt werden kann, ohne dass dabei die physikalischen Eigenschaften der Folie nennenswert negativ beeinflusst werden.

Die nachstehende Tabelle (Tabelle 1) fasst die wichtigsten erfindungsgemäßen Folieneigenschaften noch einmal zusammen.

**Tabelle 1**

|  | zweckmäßig | bevorzugt | besonders bevorzugt | Einheit |
|---|---|---|---|---|
| Basisschicht B |  |  |  |  |
| Konzentration Ethylenisophthalat | 8,5-20 | 9-18 | 9,5 - 16 | Gew.-% |
| Anteil Basisschicht B an Gesamtfoliendicke | 50-95 | 55-90 | 60-85 | % |
| Deckschicht A |  |  |  |  |
| Antiblockmittelgehalt | 0,05-2,0 | 0,1-1,5 | 0,2 - 1,0 | Gew.-% |
| $d_{50}$ des Antiblockmittels | 2-8 | 2,1 - 7 | 2,2 - 6 | $\mu$m |
| $R_a$ der A-Seite | 40-150 | 43-140 | 46-130 | nm |
| Reibungswert COF A-SeitelA-Seite | $\leq 0,4$ | $\leq 0,35$ | $\leq 0,3$ | dimensionslos |
| Dicke der Deckschicht A | > 0,4 | 0,5 - 5,0 | 0,6-4,0 | $\mu$m |
| Eigenschaften der Folie |  |  |  |  |
| Gesamtdicke der Folie | 8-30 | 9-25 | 10-20 | $\mu$m |
| Falttest | ++ | ++ | ++ |  |

(fortgesetzt)

| Eigenschaften der Folie | | | | |
|---|---|---|---|---|
| Verdrillungseigenschaft | + | + | + | |
| Verdrillungsstabilität | ++ | ++ | ++ | |
| Transparenz | <65 | <60 | <55 | % |
| Weißgrad | >60 | >70 | >75 | |
| Glanz (60°) | >80 | >90 | >100 | |

Zur Charakterisierung der Rohstoffe und der Folien wurden die folgenden Messmethoden benutzt:

DIN = Deutsches Institut für Normung
ASTM = American Society for Testing and Materials

**Dichte**

Die Dichte der Folie wird nach ASTM D1505-68 Methode C bestimmt.

**Transparenz**

Die Transparenz wird nach ASTM-D 1033-77 gemessen.

**Oberflächenwiderstand**

Der Oberflächenwiderstand wird mit dem Messgerät Hiresta UP (MCP-HT450) nach DIN 53482 bestimmt.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hans Loos, Farbmessung, Verlag Beruf und Schule, Itzehoe (1989) beschrieben.

**SV-Wert (Standard Viskosität)**

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV = [\eta] = 6{,}907 \cdot 10^{-4} \, SV \, (DCE) + 0{,}063096 \, [dl/g]$$

**Reibung**

Die Reibung wird nach DIN 53375 bestimmt. Die Gleitreibungszahl wurde 14 Tage nach der Produktion gemessen.

**Mittlere Oberflächenrauigkeit $R_a$**

Die mittlere Oberflächenrauhigkeit $R_a$ wird nach DIN 4768, cut-off 0,25 mm, bestimmt.

**Mittlerer Partikeldurchmesser d$_{50}$**

Die Bestimmung des mittleren Partikeldurchmesser d$_{50}$ wird mittels Lasermethode auf einem Malvern Master Sizer nach der Standardmethode durchgeführt (andere Messgeräte sind z. B. Horiba LA 5000 oder Sympathec Helos, welche das gleiche Messprinzip verwenden). Die Probe wird dazu in eine Küvette mit Wasser gegeben und diese dann in das Messgerät gestellt. Der Messvorgang ist automatisch und beinhaltet auch die mathematische Bestimmung des d$_{50}$-Wertes.

Der d$_{50}$-Wert wird dabei definitionsgemäß aus der (relativen) Summenkurve der Partikelgrößenverteilung bestimmt. Der Schnittpunkt des 50%-Ordinatenwertes mit der Summenkurve liefert auf der Abzissenachse den d$_{50}$-Wert.

**Glanz**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos.

**Falttest**

Aus der Folie werden Folienstreifen längs und quer zur Maschinenrichtung ausgeschnitten.

Muster in Maschinenrichtung:

10 cm (Maschinenrichtung) x 1,5 cm (quer zur Maschinenrichtung)

Muster quer zur Maschinenrichtung:

10 cm (quer zur Maschinenrichtung) x 1,5 cm (Maschinenrichtung)

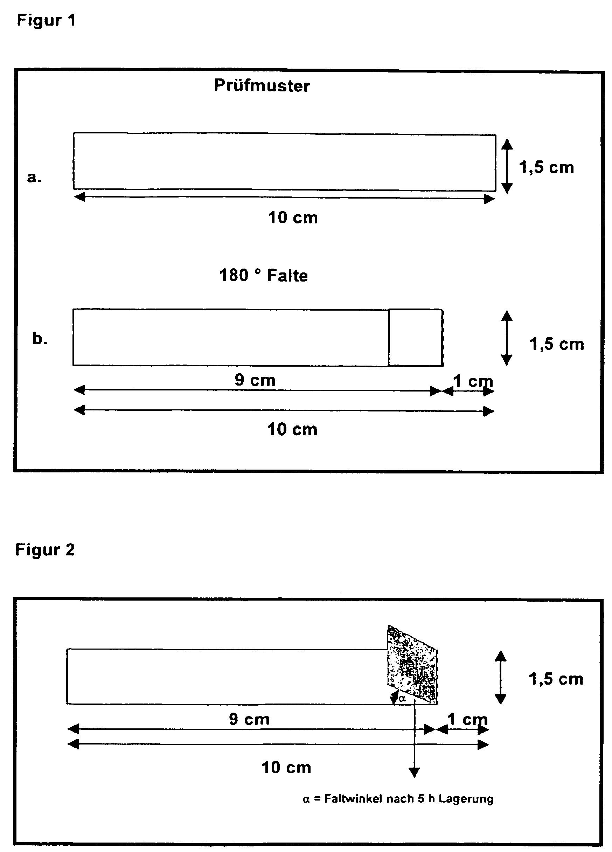

Wie in Figur 1 schematisch dargestellt werden die Folienmuster an der 9 cm-Linie bei 25°C gefaltet (Folienstreifen/180"-Falte, siehe Figur 1).

Faltbedingungen: Presszeit 10 s, Anpressdruck 30 bar (bezogen auf die Faltfläche), Temperatur 25°C, Gerät: Wärmekontakt-Heißsiegelgerät Typ HSG-C der Firma Brugger Feinmechanik GmbH, München (DE).

Es werden jeweils zwanzig Muster von jedem Beispiel gefaltet. Die Muster werden 5 h gelagert und dann jeweils der Faltwinkel $\alpha$ bestimmt (s. Figur 2). Als verbleibender Faltwinkel ist die Summe der zwanzig gemessenen Faltwinkel dividiert durch die Musteranzahl 20 definiert.

Bewertung:

| | | |
|---|---|---|
| ++ | verbleibender Faltwinkel $\alpha \leq 15°$ | sehr gut |
| + | verbleibender Faltwinkel $\alpha >15°$, aber $\leq 30°$ | gut |
| - | verbleibender Faltwinkel $\alpha >30°$, aber $\leq 40°$ | mäßig |
| -- | verbleibender Faltwinkel $\alpha >40°$ | schlecht |

**VerdrillungseigenschaftlDreheinschlagseigenschaft**

Folienmuster mit den Maßen 8,5 cm (quer zur Folienrichtung) und 7 cm (längs zur Folienrichtung) werden ausgeschnitten. 50 Hartbonbons der Marke nimm 2[®], Hersteller August Storck KG, Berlin (DE) werden mittels Hand eingeschlagen, wobei jeweils an jedem Ende gegenläufig in Querrichtung um 540° (entspricht einer 1,5-fachen Drehung) verdrillt wird.

\+ sehr gute Verdrillungseigenschaft; Bonbons lassen sich problemlos mittels Dreheinschlag einschlagen, Zwickel sind stabil

\- schlechte Verdrillungseigenschaften; Zwickel drehen sich deutlich zurück

**Verdrillungsstabilität**

40 mittels Dreheinschlag (wie oben beschrieben) verpackte Bonbons werden in eine Rechteckschale (ACPET-Schale, Typ 2187/1 G, von Fa. Faerch Plast, Holstebro (DK), Breite ca. 11 cm, Länge ca. 14 cm, Höhe ca. 5 cm) gefüllt. Die Schale wird auf einem Horizontalschüttler (Typ HS 500, Ika-Werke GmbH, Staufen (DE) befestigt und 5 h geschüttelt (200 Hübe/min, Hubweite 3 cm), um eine Transportbelastung der eingeschlagenen Bonbons zu simulieren. Nach 5 h wird beurteilt, ob sich Bonbons selbstständig entpackt haben.

Bewertung:

++ kein Bonbon ist entpackt - Verdrillungsstabilität ist sehr gut

- ein bis fünf Bonbons sind entpackt - Verdrillungsstabilität mäßig
- mehr als fünf Bonbons sind entpackt - Verdrillungsstabilität schlecht

**Laufsicherheit der Folie**

Die Laufsicherheit der Folie ist maßgeblich für die Wirtschaftlichkeit. Störungen wie z. B. Foliensplits, Abriss, das Herauslaufen der Folie führen zu einer schlechteren Wirtschaftlichkeit. Die Laufsicherheit wird folgendermaßen beurteilt:

++ sehr gute Laufsicherheit; keine Störung der Produktion innerhalb von 10 h
+ gute Laufsicherheit; die Folie reißt während einer 10 h-Produktion maximal einmal ab

- schlechte Laufsicherheit; die Folie reißt während einer 10 h-Produktion zweimal ab
- sehr schlechte Laufsicherheit; die Folie reißt während einer 10 h-Produktion mindestens dreimal ab.

**Wickelverhalten der Folie**

Das Wickelverhalten der Folie wird visuell beim Aufwickeln der Maschinenrolle direkt nach der biaxialen Orientierung beurteilt.

+ Die Maschinenrolle ist einwandfrei gewickelt. Es werden keine Falten, kein Verschießen der Folienbahn und keine Blockpickel infolge von Verblockung von Folienlagen festgestellt.

- Die Maschinenrolle ist fehlerbehaftet gewickelt. Es wird mindestens einer der folgenden Fehler beobachtet: Falten, Verschießen der Folienbahn, Blockpickel infolge von Verblockung von Folienlagen.

**Rollenaufmachung**

Die Rollenaufmachung wird visuell nach der Konfektionierung der Maschinerolle zu schmäleren Kundenrolle beurteilt.

+ Die Kundenrolle ist einwandfrei gewickelt. Es werden keine Falten, keine Rillen in der Folienbahn und keine Blockpickel infolge von Verblockung von Folienlagen festgestellt.

- Die Kundenrolle ist fehlerbehaftet gewickelt. Es wird mindestens einer der folgenden Fehler beobachtet: Falten, Rillen in der Folienbahn, Blockpickel infolge von Verblockung von Folienlagen.

Im Nachfolgenden wird die Erfindung anhand von Beispielen näher erläutert.

**Beispiel 1**

Chips aus Copolyester und Masterbatch mit Rutil als Weißpigment wurden einem Zweischneckenextruder für die Basisschicht (B) zugeführt. Ebenfalls wurden Chips aus Polyethylenterephthalat, Masterbatch enthaltend Rutil-Titandioxid als Weißpigment und Masterbatch mit Antiblockmittel einem Zweischneckenextruder für die beiden (gleichen) Deckschichten (A) zugeführt.

Dann wurde durch Coextrusion und anschließende stufenweise Orientierung in Längs- und Querrichtung eine weiße, dreischichtige Folie mit ABA-Aufbau und einer Gesamtdicke von 12,0 $\mu$m hergestellt. Die Dicke der beiden Deckschichten betrug jeweils 1,0 μm.

Basisschicht (B):

| | |
|---|---|
| 85 Gew.-% | Copolyester mit 18 Gew.-% Ethylenisophthalat und 82 Gew.-% Ethylenterephthalat (Invista, DE) |
| 15 Gew.-% | Masterbatch der Fa. Sukano (Schindellegi, CH) mit 50 Gew.-% Titandioxid (mittlerer Teilchendurchmesser Titandioxid ca. 0,3 μm) und 50 Gew.-% Polyethylenterephthalat |

Deckschicht (A), Mischung aus:

| | |
|---|---|
| 70 Gew.-% | Polyethylenterephthalat mit einem SV-Wert von 800 |
| 15 Gew.-% | Masterbatch der Fa. Sukano (Schindellegi, CH) mit 50 Gew.-% Titandioxid (mittlerer Teilchendurchmesser Titandioxid ca. 0,3 μm) und 50 Gew.-% Polyethylenterephthalat. |
| 15 Gew.-% | Masterbatch aus 97,5 Gew.-% Polyethylenterephthalat (SV-Wert von 800) und 2,5 Gew.-% Sylobloc 44 H (synthetisches SiO$_2$ der Fa. Grace, Durchmesser = 2,5 μm) |

Die Herstellungsbedingungen in den einzelnen Verfahrensschritten waren:

| | | | | |
|---|---|---|---|---|
| Extrusion | Temperaturen | A-Schicht: | 280 | °C |
| | | B-Schicht: | 280 | °C |
| | Temperatur der Abzugswalze | | 20 | °C |
| Längsstreckung | Aufheiztemperatur | | 70-90 | °C |
| | Strecktemperatur | | 85 | °C |
| | Längsstreckverhältnis | | 3,2 | |
| Querstreckung | Aufheiztemperatur | | 100 | °C |
| | Strecktemperatur | | 115 | °C |
| | Querstreckverhältnis | | 3,8 | |
| Fixierung | Temperatur | | 230 | °C |
| | Dauer | | 3 | s |

Es wurde eine Folie mit einer Transparenz von 55,0 %, einem Weißgrad nach Berger von 76 und einem Glanz (Messwinkel 60°) von 104 mit sehr guter Laufsicherheit und sehr guten Verarbeitungseigenschaften erhalten. Die Dichte der Folie betrug 1,41 g/cm$^3$. Die Folie besaß bei Raumtemperatur sehr gute Falt- und Dreheinschlageigenschaften.

**Beispiel 2**

Im Vergleich zu Beispiel 1 wurde jetzt nur die Zusammensetzung der Basisschicht (B) geändert. Der ABA-Aufbau und alle anderen Parameter wurden beibehalten.

Basisschicht (B), Mischung aus:

| | |
|---|---|
| 85 Gew.-% | Copolyester mit 10 Gew.-% Ethylenisophthalat und 90 Gew.-% Ethylenterephthalat (Invista, DE) |
| 15 Gew.-% | Masterbatch der Fa. Sukano (Schindellegi, CH) mit 50 Gew.-% Titandioxid (mittlerer Teilchendurchmesser Titandioxid ca. 0,3 μm) und 50 Gew.-% Polyethylenterephthalat |

Es wurde eine Folie mit einer Transparenz von 54 %, einem Weißgrad nach Berger von 76, einem Glanz (Messwinkel 60°) von 104 mit sehr guter Laufsicherheit und sehr guten Verarbeitungseigenschaften erhalten. Die Folie besaß bei Raumtemperatur sehr gute Falt- und Dreheinschlageigenschaften. Die Dichte der Folie betrug 1,45 g/cm$^3$.

**Beispiel 3**

Die Folie aus Beispiel 1 wurde zusätzlich für die Bedruckung in-line coronabehandelt. Die Oberflächenspannung betrug nach der Behandlung 50 mN/m.

Es wurde eine Folie mit einer Transparenz von 55,0 %, einem Weißgrad nach Berger von 76 und einem Glanz (Messwinkel 60°) von 104 mit sehr guter Laufsicherheit und sehr guten Verarbeitungseigenschaften erhalten. Die Dichte der Folie betrug 1,41 g/cm$^3$. Die Folie besaß bei Raumtemperatur sehr gute Falt- und Dreheinschlageigenschaften.

**Beispiel 4**

Die Folie aus Beispiel 1 wurde in-line mit einer Acrylat-Beschichtung, die ein Antistatikum enthielt, beschichtet. Die Oberflächenspannung betrug nach der chemischen Oberflächenbehandllung 37 mN/m. Die Beschichtung eignete sich zum Bedrucken mit NC- und UV-Druckfarben. Das Antistatikum verhinderte die Staubanziehung während des Verarbeitungsprozesses. Der Oberflächenwiderstand der beschichteten Oberfläche betrug $1,8*10^{12}$ Ω/sq. nach DIN 53482.

Es wurde eine Folie mit einer Transparenz von 55,0 %, einem Weißgrad nach Berger von 76 und einem Glanz (Messwinkel 60°) von 104 mit sehr guter Laufsicherheit und sehr guten Verarbeitungseigenschaften erhalten. Die Dichte der Folie betrug 1,41 g/cm$^3$. Die Folie besaß bei Raumtemperatur sehr gute Falt- und Dreheinschlageigenschaften.

**Vergleichsbeispiel 1**

Im Vergleich zu Beispiel 1 wurde jetzt nur die Zusammensetzung der Basisschicht (B) geändert. Alle anderen Parametern wurden beibehalten.
Basisschicht (B), Mischung aus:

| | |
|---|---|
| 85 Gew.-% | Copolyester mit 4,5 Gew.-% Ethylenisophthalat und 95,5 Gew.-% Ethylenterephthalat (Invista, DE) |
| 15 Gew.-% | Masterbatch der Fa. Sukano (Schindellegi, CH) mit 50 Gew.-% Titandioxid (mittlerer Teilchendurchmesser Titandioxid ca. 0,3 μm) und 50 Gew.-% Polyethylenterephthalat |

Die Folie zeigte gegenüber den Beispielen 1 bis 4 ungenügende Falt- und Dreheinschlageigenschaften. Die Dichte der Folie betrug 1,46 g/cm$^3$, die Transparenz 56 % und der Weißgrad nach Berger 75.

**Vergleichsbeispiel 2**

Es wurde das Beispiel 1 der Anmeldung EP-A-1 857 496 nachgearbeitet.

Die Folie besaß eine hohe Transparenz (91,7 %), einen niedrigen Weißgrad (12) und zeigte eine ungenügende Verdrillungsstabilität. Die Dichte der Folie betrug 1,392 g/cm$^3$.

Die Ergebnisse der Beispiele / Vergleichsbeispiele sind in Tabelle 2 zusammengefasst.

**Tabelle 2: Beurteilung der Beispiele und Vergleichsbeispiele**

| | Falttest | Verdrillbarkeit | Verdrillungsstabilität | Mittlere Rauigkeit $R_a$ der A-Seite | Reibungswert COF A-Seite/A-Seite |
|---|---|---|---|---|---|
| | | | | nm | |
| Beispiel 1 | ++ | + | ++ | 48 | 0,29 |
| Beispiel 2 | ++ | + | ++ | 49 | 0,28 |
| Beispiel 3 | ++ | + | ++ | 48 | 0,29 |
| Beispiel 4 | ++ | + | ++ | 48 | 0,29 |
| Vergleichsbeispiel 1 | - | - | - | 45 | 0,29 |
| Vergleichsbeispiel 2 | + | + | - | 50 | 0,42 |

**Patentansprüche**

1.  Weiße, coextrudierte, biaxial orientierte Polyesterfolie mit einer Basisschicht (B) und mindestens einer Deckschicht, wobei

    a) die Basisschicht (B) aus überwiegend thermoplastischem Polyester besteht, der 8,5 bis 20 Gew.-% Ethylenisophthalat-abgeleitete Einheiten und ein Weißpigment in einer Konzentration von 2 bis 15 Gew.-% (Gew.-%-Angaben bezogen auf die Basisschicht) enthält, und

b) mindestens eine der Deckschichten aus überwiegend thermoplastischem Polyester besteht, der ein Weißpigment in einer Konzentration von 2 bis 15 Gew.-% und zusätzlich 0,05 bis 2,0 Gew.-% eines Antiblockmittels mit einem mittleren Durchmesser ($d_{50}$-Wert) im Bereich von 2,0 bis 8,0 $\mu$m (Gew.%-Angaben bezogen auf die Deckschicht) enthält,

und wobei die Folie eine Falteigenschaft ausgedrückt als verbleibender Faltwinkel von $\alpha \leq 30°$ nach dem Falten aufweist.

2. Polyesterfolie nach Anspruch 1, **dadurch gekennzeichnet, dass** sie aus einer Basisschicht (B) und einer Deckschicht (A) und einer Deckschicht (C) besteht (ABC-Folie).

3. Polyesterfolie nach Anspruch 2, **dadurch gekennzeichnet, dass** die Deckschicht (C) vom chemischen Aufbau her und von der Dicke her der Deckschicht (A) entspricht (ABA-Folie).

4. Polyesterfolie nach Anspruch 1, 2 oder 3, **dadurch gekennzeichnet, dass** sie

   - einen Weißgrad von >60 und/oder
   - eine Transparenz (nach ASTM-D 1033-77) von <65 % und/oder
   - einen Glanz von >80 (gemessen nach DIN 67 530 bei 60°) aufweist.

5. Polyesterfolie nach einem der Ansprüche 1 bis 4, **dadurch gekennzeichnet, dass** das Weißpigment Bariumsulfat und/oder Calciumcarbonat und/oder Titandioxid ist, bevorzugt allein Titandioxid.

6. Polyesterfolie nach einem der Ansprüche 1 bis 5, **dadurch gekennzeichnet, dass** das Weißpigment Titandioxid vom Rutil-Typ mit anorganischer Beschichtung ist, bevorzugt mit einer mittleren Teilchengröße ($d_{50}$) von 0,05 bis 0,5 $\mu$m.

7. Polyesterfolie nach einem der Ansprüche 1 bis 6, **dadurch gekennzeichnet, dass** die Basisschicht und mindestens eine Deckschicht einen optischen Aufheller enthält.

8. Polyesterfolie nach einem der Ansprüche 1 bis 7, **dadurch gekennzeichnet, dass** das Antiblockmittel ausgewählt ist aus einem oder mehreren der Partikelsysteme: amorphe Kieselsäure, Talk, Aluminumoxid, Kaolin und vernetzte organische Partikel.

9. Polyesterfolie nach einem der Ansprüche 1 bis 8, **dadurch gekennzeichnet, dass** der Reibungskoeffizient (COF) der Deckseite (A) gegen sich selbst kleiner/gleich 0,40 ist und/oder die Rauigkeit der Deckschicht (A), ausgedrückt als $R_a$-Wert $\geq$40 nm und $\leq$ 150 nm, ist.

10. Verfahren zur Herstellung einer Folie nach Anspruch 1, wobei zunächst die Rohstoffe der einzelnen Schichten der Folie in Extrudern komprimiert und zu Schmelzen verflüssigt werden, die Schmelzen dann gleichzeitig durch eine Breitschlitzdüse gepresst werden und die dabei gebildete, ausgepresste, mehrschichtige Folie auf einer oder mehreren gekühlten Abzugswalzen abgezogen wird, wobei sie zu einer Vorfolie abkühlt und sich verfestigt, die Vorfolie dann biaxial gestreckt, thermofixiert und dann aufgerollt wird, **dadurch gekennzeichnet, dass**

   a) die Basisschicht (B) aus überwiegend thermoplastischem Polyester besteht, der 8,5 bis 20 Gew.-% Ethylenisophthalat-abgeleitete Einheiten und ein Weißpigment in einer Konzentration von 2 bis 15 Gew.-% (Gew.-%-Angaben bezogen auf die Basisschicht) enthält, und

   b) mindestens eine der Deckschichten aus überwiegend thermoplastischem Polyester besteht, der ein Weißpigment in einer Konzentration von 2 bis 15 Gew.-% und zusätzlich 0,05 bis 2,0 Gew.-% eines Antiblockmittels mit einem mittleren Durchmesser ($d_{50}$ Wert) im Bereich von 2,0 bis 8,0 $\mu$m (Gew.-%-Angaben bezogen auf die Deckschicht) enthält.

11. Verwendung einer Folie nach Anspruch 1 als Verpackungsfolie.

12. Verwendung nach Anspruch 11 als Dreheinschlags- und/oder Faltverpackung.

**Claims**

1. A white, coextruded, biaxially oriented polyester film with a base layer (B) and with at least one outer layer, where

   a) the base layer (B) is composed of predominantly thermoplastic polyester which contains from 8.5 to 20 % by weight of ethylene-isophthalate-derived units and which contains a concentration of from 2 to 15 % by weight of a white pigment (where the % by weight data are based on the base layer), and
   b) at least one of the outer layers is composed of predominantly thermoplastic polyester, which comprises a concentration of from 2 to 15 % by weight of a white pigment and which also comprises from 0.05 to 2.0 % by weight of an antiblocking agent with a median diameter ($d_{50}$ value) in the range from 2.0 to 8.0 $\mu$m (where the % by weight data are based on the outer layer), and where the film has a crease property expressed in terms of residual crease angle $\alpha \leq 30°$ after creasing.

2. The polyester film as claimed in claim 1, which is composed of a base layer (B) and of an outer layer (A) and of an outer layer (C) (ABC film).

3. The polyester film as claimed in claim 2, wherein the chemical structure and thickness of the outer layer (C) correspond to those of the outer layer (A) (ABA film).

4. The polyester film as claimed in claim 1, 2 or 3, which has

   - whiteness > 60, and/or
   - transparency (to ASTM D1033-77) < 65 %, and/or
   - gloss > 80 (measured to DIN 67 530 at 60 °).

5. The polyester film as claimed in any of claims 1 to 4, wherein the white pigment is barium sulfate and/or calcium carbonate and/or titanium dioxide, preferably titanium dioxide alone.

6. The polyester film as claimed in any of claims 1 to 5, wherein the white pigment is the rutile form of titanium dioxide with inorganic coating, preferably with median particle size ($d_{50}$) of from 0.05 to 0.5 um.

7. The polyester film as claimed in any of claims 1 to 6, wherein the base layer and at least one outer layer comprises an optical brightener.

8. The polyester film as claimed in any of claims 1 to 7, wherein the antiblocking agent has been selected from one or more of the following particle systems: amorphous silica, talc, aluminum oxide, kaolin, and crosslinked organic particles.

9. The polyester film as claimed in any of claims 1 to 8, wherein the coefficient of friction (COF) of the outer side (A) with respect to itself is smaller than or equal to 0.40, and/or the roughness of the outer layer (A), expressed in terms of $R_a$ value, is $\geq$ 40 nm and $\leq$ 150 nm.

10. A process for producing a film as claimed in claim 1, where the raw materials of the individual layers are first compressed in extruders and are plastified to give melts, the melts are then simultaneously forced through a flat-film die, and the resultant coextruded film is drawn off on one or more cooled take-off rolls, whereupon it cools and solidifies to give a prefilm, and the prefilm is then biaxially stretched and heat-set, and then wound up, which comprises

    a) the base layer (B) composed of predominantly thermoplastic polyester which contains from 8.5 to 20 % by weight of ethylene-isophthalate-derived units and which contains a concentration of from 2 to 15 % by weight of a white pigment (where the % by weight data are based on the base layer), and
    b) at least one of the outer layers composed of predominantly thermoplastic polyester, which comprises a concentration of from 2 to 15 % by weight of a white pigment and which also comprises from 0.05 to 2.0 % by weight of an antiblocking agent with a median diameter ($d_{50}$ value) in the range from 2.0 to 8.0 $\mu$m (where the % by weight data are based on the outer layer).

11. The use of a film as claimed in claim 1 as packaging film.

12. The use as claimed in claim 11 as twist-wrap packaging and/or foldable packaging.

**Revendications**

1. Film polyester blanc, co-extrudé, orienté de manière biaxiale avec une couche de base (B) et au moins une couche de couverture, où

   a) la couche de base (B) est constituée principalement de polyester thermoplastique, qui contient de 8,5 à 20 % en poids d'unités dérivées d'éthylène isophtalate et un pigment blanc à une concentration de 2 à 15 % en poids (les indications en % en poids étant données par rapport à la couche de base), et
   b) au moins l'une des couches de couverture est constituée principalement d'un polyester thermoplastique qui contient un pigment blanc à une concentration de 2 à 15 % en poids et en complément 0,05 à 2,0 % en poids d'un agent d'anti-adhérence avec un diamètre moyen (valeur $d_{50}$) dans la gamme de 2,0 à 8,0 $\mu$m (les indications en % en poids étant données par rapport à la couche de couverture),

   et où le film présente une propriété de pliage s'exprimant sous la forme d'un angle de pliage $\sigma \leq 30°$ restant après le pliage.

2. Film polyester selon la revendication 1, **caractérisé en ce qu'**il est constitué d'une couche de base (B) et d'une couche de couverture (A), et d'une couche de couverture (C) (Film ABC).

3. Film polyester selon la revendication 2, **caractérisé en ce que** la couche de couverture (C) correspond à la couche de couverture (A) de part sa composition chimique et au niveau de l'épaisseur (Film ABA).

4. Film polyester selon les revendications 1, 2 ou 3, **caractérisé en ce qu'**il présente

   - un degré de blancheur > 60, et/ou
   - une transparence (selon la norme ASTM-D 1033-77) < 65 %, et/ou
   - une brillance > 80 (mesurée selon la norme DIN 67 530 à 60 °).

5. Film polyester selon l'une des revendications 1 à 4, **caractérisé en ce que** le pigment blanc est du sulfate de baryum et/ou du carbonate de calcium, et/ou du dioxyde de titane, de préférence, uniquement de dioxyde de titane.

6. Film polyester selon l'une des revendications 1 à 5, **caractérisé en ce que** le pigment blanc est du dioxyde de titane de type rutile avec un revêtement inorganique, de préférence avec une taille particulaire moyenne ($d_{50}$) de 0,05 à 0,5 %$\mu$m.

7. Film polyester selon l'une des revendications 1 à 6, **caractérisé en ce que** la couche de base et au moins une couche de couverture contiennent un agent éclaircissant optique.

8. Film polyester selon l'une des revendications 1 à 7, **caractérisé en ce que** l'agent d'anti-adhérence est choisi parmi un ou plusieurs des systèmes particulaires : acide silicique amorphe, talc, oxyde d'aluminium, kaolin et particules organiques réticulées.

9. Film polyester selon l'une des revendications 1 à 8, **caractérisé en ce que** le coefficient de friction (COF) de la couche de couverture (A) par lui-même est inférieur/égal à 0,40 et/ou la rugosité de la couche de couverture (A) exprimée sous la forme de la valeur $R_a$ est $\geq$ 40 nm et$\leq$ 150 nm.

10. Procédé de fabrication d'un film selon la revendication 1, où, tout d'abord, les produits bruts des couches individuelles du film sont comprimés dans des extrudeuses et sont rendus liquides par fusion, les produits fondus sont comprimés simultanément par une fente de filière et le film formé, extrudé, multicouche en résultant est étiré sur un ou plusieurs cylindres extracteurs refroidis, où ils sont refroidis en un précurseur de film et se solidifient, ensuite le précurseur de film est étiré de manière biaxiale, thermofixé et ensuite enroulé, **caractérisé en ce que**

    a) la couche de base (B) est constituée principalement de polyester thermoplastique, qui contient de 8,5 à 20 % en poids d'unités dérivées d'éthylène isophtalate et un pigment blanc à une concentration de 2 à 15% en poids (les indications en % en poids étant données par rapport à la couche de base), et
    b) qu'au moins l'une des couches de couverture est constituée principalement d'un polyester thermoplastique qui contient un pigment blanc à une concentration de 2 à 15% en poids et en complément 0,05 à 2,0 % en poids d'un agent d'anti-adhérence avec un diamètre moyen (valeur $d_{50}$) dans la gamme de 2,0 à 8,0 $\mu$m (les

indications en % en poids étant données par rapport à la couche de couverture).

11. Utilisation d'un film selon la revendication 1 en tant que film d'emballage.

12. Utilisation selon la revendication 11 en tant qu'emballage par torsion et/ou emballage pliant.

**Figur 1**

Prüfmuster

a.

1,5 cm

10 cm

180 ° Falte

b.

1,5 cm

9 cm

1 cm

10 cm

**Figur 2**

1,5 cm

9 cm

1 cm

10 cm

α = Faltwinkel nach 5 h Lagerung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005058914 A
- EP 1857496 A

- WO 010285 A

**In der Beschreibung aufgeführte Nicht-Patentliteratur**

- **HANS LOOS.** Farbmessung. Verlag Beruf und Schule, 1989